(19) Europäisches Patentamt
European Patent Office
Office européen des brevets

(11) **EP 3 818 026 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**10.12.2025 Patentblatt 2025/50**

(45) Hinweis auf die Patenterteilung:
**31.08.2022 Patentblatt 2022/35**

(21) Anmeldenummer: **19736649.5**

(22) Anmeldetag: **02.07.2019**

(51) Internationale Patentklassifikation (IPC):
***C04B 26/06*** (2006.01) ***C04B 26/16*** (2006.01)
***C04B 26/18*** (2006.01) ***C04B 40/06*** (2006.01)
***F16B 13/14*** (2006.01) ***C04B 111/00*** (2006.01)
***C07C 407/00*** (2006.01) ***C08L 63/10*** (2006.01)
***E21D 20/02*** (2006.01)

(52) Gemeinsame Patentklassifikation (CPC):
**C04B 26/06; C04B 26/16; C04B 26/18; C04B 40/065; E21D 20/02; F16B 13/145;**
C04B 2111/00715

(86) Internationale Anmeldenummer:
**PCT/EP2019/067664**

(87) Internationale Veröffentlichungsnummer:
**WO 2020/007820 (09.01.2020 Gazette 2020/02)**

(54) **PHTHALATFREIER KIT - VERWENDUNG ZUM BEFESTIGEN VON VERANKERUNGSELEMENTEN IM BAUBEREICH**

PHTHALATE-FREE KIT, USE FOR SECURING ANCHORING ELEMENTS IN CONSTURCTION AREA

UTILISATION D'UN KIT EXEMPT DE PHTALATE POUR FIXER DES ÉLÉMENTS D'ANCRAGE DANS LE DOMAINE DE LA CONSTRUCTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.07.2018 DE 102018116179**

(43) Veröffentlichungstag der Anmeldung:
**12.05.2021 Patentblatt 2021/19**

(73) Patentinhaber: **fischerwerke GmbH & Co. KG**
**72178 Waldachtal (DE)**

(72) Erfinder:
- **VOGEL, Martin**
  **79286 Glottertal (DE)**
- **HERBSTRITT, Yvonne**
  **79183 Waldkirch (DE)**
- **KASPER, Patrick**
  **79350 Sexau (DE)**

(74) Vertreter: **Kunst, Manuel Nikolaus Johannes**
**Maucher Jenkins**
**Patent-und Rechtsanwälte**
**Urachstrasse 23**
**79102 Freiburg im Breisgau (DE)**

(56) Entgegenhaltungen:
**EP-A1- 0 432 087** **EP-A1- 0 508 183**
**EP-A1- 0 534 197** **EP-A1- 0 867 624**
**EP-A2- 0 199 671** **EP-B1- 3 712 184**
**WO-A1-00/29498** **WO-A1-02/051802**
**WO-A1-02/079293** **WO-A1-2007/042199**
**WO-A1-2012/159726** **WO-A1-88/03599**
**WO-A1-95/18180** **WO-A1-95/18180**
**WO-A1-98/33770** **WO-A2-02/053531**
**US-A- 3 324 040** **US-A- 3 538 011**
**US-A- 4 376 218** **US-A- 4 455 252**
**US-A- 4 518 283** **US-A- 5 334 326**
**US-A- 5 690 856** **US-A1- 2004 092 673**
**US-A1- 2004 092 673** **US-B1- 6 583 259**

- **LANG G.: "Festigkeitseigenschaften von Verbundanker-Systemen", BAUINGENIEUR - ZEITSCHRIFT FÜR DAS GESAMTE BAUWESEN, SPRINGER VERLAG, vol. 54, 1 January 1979 (1979-01-01), pages 41 - 46, XP093119909**
- **COMITÉ EURO-INTERNATIONAL DU BETON: "Fastenings To Concrete And Masonry Structures", 1 January 1994, THOMAS TELFORD, UK, ISBN: 0-7277-1937-8, article COMITÉ EURO-INTERNATIONAL DU BÉTON: "Introduction", pages: 20 - 24, XP009551816**



Processed by Luminess, 75001 PARIS (FR)

**(Forts. nächste Seite)**

- GIRMSCHEID, GERHARD: "Baubetrieb und Bauverfahren im Tunnelbau (2.Auflage)", 24 June 2008, ERNST & SOHN, DE, ISBN: 978-3-433-01852-1, article GERHARD GIRMSCHEID: "8.3 Anker", pages: 212 - 222, XP009551817, DOI: 10.1002/9783433600191.ch8
- KINDMANN ROLF, STRACKE MICHAEL: "Verbindungen im Stahl- und Verbundbau", 8 September 2009, ERNST & SOHN, DE, ISBN: 978-3-433-02916-9, article ROLF KINDMANN; MICHAEL STRACKE: "6.9 Dübel zur Verankerung im Beton", pages: 379 - 383, XP009551818
- Durchführungsbeschluss (EU) 2018/636 der Kommission vom 17.April 2018 zur Identifizierung von Dicyclohexylphthalat (DCHP) alsbesonders besorgniserregender Stoff gemäß Artikel 57 Buchstabenc und f der Verordnung (EG) Nr. 1907/2006 des EuropäischenParlaments und des Rates: Amtsblatt der Europäischen Union,L105 25 25.4.2018
- "Perkadox CH-50, Product Data Sheet", AKZO NOBEL, 1 August 2008 (2008-08-01), XP093120099, [retrieved on 20240116]
- "Our curing systems for thermoset resins ", AKZO NOBEL, 1 January 2013 (2013-01-01), XP093120108, [retrieved on 20240116]
- "HVU2 User Guide (Doc-Nr: PUB / 5366892 / 000 / 00)", HILTI, pages 1 - 80, XP009551433, Retrieved from the Internet <URL:https://www.manualslib.com/manual/1924265/Hilti-Hvu2.html#product-HVU2>
- "Sicherheitsdatenblatt, V-P M8 bis V-P M30", MKT, 3 November 2020 (2020-11-03), XP093120118, [retrieved on 20240116]
- ANONYMOUS: "Chemical Anchor capsule MVA, Dimensions M8 up to M30 - SAFETY DATA SHEET", MUNGO, 7 June 2017 (2017-06-07), XP093120122, Retrieved from the Internet <URL:https://www.theo-schrauben.de/blog/wp-content/uploads/2020/09/EN_SDS_MVA.pdf> [retrieved on 20240116]
- FELIXBERGER, JOSEF K.: "Chemie für Einsteiger", 1 January 2017, SPRINGER SPEKTRUM, DE, ISBN: 978-3-662-52820-4, article JOSEF K. FELIXBERGER : "Chapter 17: Organische Sauerstoffverbindungen – Sauerstoff erhöht die Molekülvielfalt", pages: 457 - 483, XP009551819, DOI: 10.1007/978-3-662-52821-1
- Annex XV report PROPOSAL FOR IDENTIFICATION OF ASUBSTANCE OF VERY HIGH CONCERN ON THE BASIS OF THECRITERIA SET OUT IN REACH ARTICLE 57, 2015-08-28, Seiten1-10. 22-25. 32-33
- Felixberger, Chemie für Einsteiger, Springer 2017, Seite 482
- SELDEN, PETER H.: "Glasfaserverstärkte Kunststoffe", 1 January 1967, SPRINGER, ISBN: 978-3-642-48456-8, article SELDEN, PETER H.: "Spezielle Eigenschaften und Anwendungsmöglichkeiten der wichtigsten Peroxid", pages: 103 - 114, XP009551820, DOI: 10.1007/978-3-642-86867-2
- Schriftsatz der Anmelderin vom 3. August 2021
- Vergleichsversuche
- Pergan, Produktdatenblatt PEROXAN BP-Pulver 50 W
- Pergan, Produktdatenblatt PEROXAN BP-Pulver 50 W+
- Pergan, Produktdatenblatt PEROXAN BP-Pulver 50 W-F
- "PERKADOX GB-50X - Sicherheitsdatenblatt", AKZO NOBEL, 5 March 2019 (2019-03-05), XP093120151, [retrieved on 20240116]
- "Ethylene Glycol Dibenzoate - Material Safety Data Sheet", TCI AMERICA, 17 February 2005 (2005-02-17), XP093120158, [retrieved on 20240116]
- JACOB MAAG, CARSTEN LASSEN, ULLA KRISTINE BRANDT, JESPER KJØLHOLT, LISE MOLANDER, SONJA HAGEN MIKKELSEN: "Identification and assessment of alternatives to selected phthalates (Environmental Project No. 1341 2010)", DANISH MINISTRY OF THE ENVIRONMENT, ENVIRONMENTAL PROJECT NO. 1341 2010, DANISH ENVIRONMENTAL PROTECTION AGENCY, vol. Environmental Project No. 1341 2010, 1 January 2010 (2010-01-01), pages 1 - 288, XP009551405
- Stieß, Mechanische Verfahrenstechnik - Partikeltechnologie 1,3.Auflage, Springer 2009, Seiten 10-13
- MASUDA HIROAKI, HIGASHITANI KO, YOSHIDA HIDETO: "Powder Technology - Fundamentals of Particles, Powder Beds, and Particle Generation", 1 January 2007, CRC PRESS, ISBN: 978-1-4200-4410-2, article "Fluidity of Powder", pages: 357 - 358, XP009551357
- MERKUS HENK G., MEESTERS GABRIEL M.H.: "Particulate Products - Tailoring Properties for Optimal Performance", 1 January 2014, SPRINGER, ISBN: 978-3-319-00713-7, article MERKUS HENK G.: "Basic Information for Design of Particulate Products (Chapter 2)", pages: 21 - 30, XP009551358, DOI: 10.1007/978-3-319-00714-4
- Fischer injeKtions und patronensysteme 07/15
- Fischer Superbond Reaktionspatrone RSB 07/2015
- Fischer Mörtelpatrone RM. 04.07.2012
- AkzoNobel, Sicherheitsdatenblatt Perkadox 20S, 2008/01/18
- Nouryon Trigonox C
- Nouryon Trigonox 239
- AkzoNobel Butanox M-50
- Wikipediaauszug Dibenzoylperoxid
- Trigon Dipropylenglykoldibenzoat




(Forts. nächste Seite)

- Wikipediaauszug Diethylenglycoldibenzoat
- Echa Screenshot
- Versuchsergebrisse
- ANALYSEBERICHT - CHEMISCHE CHARAKTERISIERUNG MIT ZUGEHÖRIGEM ANHANG
- ANALYSEBERICHT - PARTIKELGRÖSSENVERTEILUNG MIT ZUGEHÖRIGEM ANHANG
- "RSB - Sicherheitsdatenblatt", FISCHER, 29 July 2013 (2013-07-29), XP093238015, Retrieved from the Internet <URL:https://webshop. schachermayer.com/cdn/medias/docus/273/ sdat_Fischer_RSB_110613410_DE.pdf>
- Media Release vom 16. Oktober 2018 der Nouryon Global Communication
- Text der für die Erteilung seitens des EPA vorgeschlagenenBeschreibung für das Patent laut Mitt eilung gemäss Regel 71(3)vom 6. April 2022
- John J McKetta, Encylcopedia of Chemical Processing and Design,46 Pumps. Bypassto Reboilers, Marcel Dekker I994, Seiten 60/6
- A.S. Grandison et al., Separation Processes in the Food andBiotechnology Industries-Principles and Applications, Woodhead 1996, Seite 254
- Gustav o V. Barbosa-Cänovas et al., Food Powders - PhysicalProperties. Processing.and Functionality, Kluwer 2005, Seiten 63-66
- Dietmar Schulze, Pulver und Schüttgüter - Fließeigenschaften undHandhabung, 2.bearbeitete Auflage. Spnnger 2009, Seiten 24-34, 215
- Jonathan Seville et al., Particle Technology and Engineering, AnEngmeer's Guideto Particles and Powders: Fundamentals and ComputationalApproaches. Elsevier2016, Seiten 23-31
- AkzoNobel, Satety Data Sheet, Perkadox® CH-50 L, 01/13/2016
- Nouryon, Product Data Sheet, Perkadox® CH-50 L, 2022-6-30

## Beschreibung

Die Erfindung betrifft die Verwendung von einem Kit in Form von einer Patrone oder einem Folienbeutel, die oder der mehrere, insbesondere zwei, Kompartimente aufweist, von denen eines eine radikalisch polymerisierbares Kunstharz umfassende Kunstharzkomponente beinhaltet, das andere einen phlegmatisierten Radikalinitiator in einer Härterkomponente beinhaltet, wobei der Radikalinitiator durch einen phthatlatfreien Weichmacher unter mindestens teilweiser Beschichtung phlegmatisiert ist, und wobei der Weichmacher eine Schmelztemperatur im Bereich von 40 bis 90 °C, bevorzugt zwischen 60 und 75 °C hat, der Radikalinitiator bei Raumtemperatur in fester Form vorliegt und der phlegmatisierte Radikalinitiator bei Raumtemperatur in partikulärer Form vorliegt und als frei rieselndes Pulver ausgeführt ist, zur Befestigung eines Verankerungselementes in einem (insbesondere Bohr-)Loch in einem Bausubstrat, sowie ein Verfahren zur Befestigung eines Verankerungsmittels in einem Loch in einem Bausubstrat, bei dem eine vor- und nachstehend genannte Verwendung stattfindet. Die Verwendung gemäß der Erfindung ist dabei definiert in den Ansprüchen.

Organische Peroxide, wie Dibenzoylperoxid, Di-(p-chlorbenzoyl)peroxid, Di-(2,4-dichloro-benzoyl)peroxid oder Cyclohexanonperoxid, werden unter anderem als Initiatoren zur Polymerisation von radikalisch härtbaren Kunstharzen eingesetzt. Die Peroxide neigen in freier Form zu plötzlicher (bis hin zu deflagrativer oder explosiver) Zersetzung und werden deshalb zur Verwendung im Baubereich mit einem inerten Stoff "phlegmatisiert", so dass Handhabung und Lagerung der Peroxide ungefährlich sind.

Die Phlegmatisierung kann durch Wasser, durch feste anorganische Materialien wie Gips (vgl. EP 0 508 183) oder Calciumphosphat oder als Paste durch Versetzen mit Weichmachern (vgl. US 3,324,040) erfolgen.

DE 101 15 587 A1 beschreibt die Verwendung von mit Dicyclohexylphthalat inertisiertem Dibenzoylperoxid in einer Kammer (Innenglas) zweikammeriger Glaspatronen, die in einer weiterer Kammer (Ampulle) ein Harnstoffurethanharz auf Basis von Diisocyanatodiphenylmethan und tert-Butylaminoethyl-methacrylat in 1,4-Butandioldimethacrylat beinhaltet, wobei die Glaspatrone dann in ein Bohrloch verbracht und dort durch eine Gewindestange zerstört wird, so dass die Komponenten zur Reaktion kommen und Polymerisation und damit Aushärtung in Gegenwart der Gewindestange stattfindet.

US 6583259B1 offenbart ein Kit zur Befestigung einer Ankerstange in einem Bohrloch, wobei das Kit eine Kunstharzkomponente und eine Komponente enthaltend einen in Dicyclohexylphthalat phlegmatisierten Radikalinitiator umfasst.

Bei Dicyclohehxylpthalat (DCHP) und anderen Phthalaten besteht übrigens der Verdacht, dass sie deutliche gesundheitsschädigende Effekte haben können.

Es hat sich nun gezeigt, dass es möglich ist, im Bereich der Befestigung von Verankerungsmitteln in Bohrlöchern in Bausubstraten anstelle von Dicyclohexylphthalat Ethylenglykoldibenzoat zu verwenden, welches eine Schmelztemperatur im Bereich von 40 bis 90 °C hat, bei Raumtemperatur in fester Form vorliegt und der phlegmatisierte Radikalinitiator bei Raumtemperatur in partikulärer Form vorliegt und als bei Raumtemperatur frei rieselndes Pulver (frei rieselfähig, d.h. nicht klumpend, also klumpenfrei) ausgeführt ist. Die nachfolgenden Definitionen dienen der Klärung bestimmter Begriffe oder Symbole und der Beschreibung besonderer Ausführungsformen der Erfindung, wobei in den vor- und nachstehend genannten Ausführungsformen der Erfindung einzelne, mehrere oder alle Begriffe oder Symbole durch speziellere Definitionen ersetzt werden können, was zu besonderen Ausführungsformen der Erfindung führt.

Unter Raumtemperatur ist eine Temperatur im Bereich von 20 ± 2 °C, insbesondere von 20 ± 0.5 °C, zu verstehen.

"Beinhalten" oder "umfassen" bedeutet, dass neben den genannten Komponenten oder Merkmalen noch andere vorhanden sein können. Sie stehen also für eine nicht abschließende Aufzählung, im Gegensatz zu "enthalten", das eine abschließende Aufzählung der bei seiner Verwendung aufgezählten Komponenten oder Merkmale bedeutet.

Wo das Attribut "ferner" erwähnt wird, bedeutet dies, dass Merkmale ohne dieses Attribut stärker bevorzugt sein können.

"Und/oder" bedeutet, dass die genannten Merkmale/Substanzen jeweils alleine oder in Kombination von zwei oder mehr der jeweils genannten Merkmale/Substanzen vorliegen können.

Wo von "(Meth)acrylat" oder "-(meth)acrylat" die Rede ist, bedeutet dies stets ein Acrylat, ein Methacrylat oder eine Mischung eines Acrylates mit einem Methacrylat.

Geeignete Kits zur Verwendung im Rahmen der vorliegenden Erfindung sind insbesondere Patronen oder Folienbeutel.

Bei den Patronen handelt es sich um solche mit einer Außenampulle (eines der Kompartimente), die ein radikalisch härtbares Kunstharz beinhalten, und innerhalb der Außenampulle entweder einer Innenampulle (ein oder das andere der Kompartimente) mit darin dem in bei Raumtemperatur partikulärer Form vorliegenden frei rieselnden phlegmatisierten Radikalinitiator.

Die Außenampulle ist vorzugsweise aus einem schmelzbaren, bei Raumtemperatur festen und spröden Material, wie Kunststoff oder insbesondere Glas, die Innenampulle kann ebenfalls aus einem schmelzbaren, bei

Raumtemperatur festen und spröden Material, wie Kunststoff oder insbesondere Glas, oder ferner als zwei- oder mehrkammeriger (zwei- oder mehr Kompartimente aufweisender) Folienbeutel (insbesondere Kunststofffolie, gewünschtenfalls metallisiert, oder Metallfolie) ausgeführt sein.

Bei der Anwendung oder dem erfindungsgemäßen Verfahren wird in jedem Fall durch das Einbringen eines Verankerungselementes die Patrone oder der Folienbeutel zerstört und die Komponenten des erfindungsgemäßen Kits können miteinander und mit dem Verankerungselement und einer (insbesondere Bohr-)Lochwandung in Berührung kommen und das Verankerungselement unter Polymerisation im Bohrloch befestigen.

Das Phlegmatisierungsmittel für den Radikalinitiator ("Härter" im engeren Sinne) ist Ethylenglykoldibenzoat.

Eine Schmelztemperatur im Bereich von 40 bis 90 °C ist vorzugsweise eine solche, die mittels Aufschmelzen der Probe und Ablesen der Schmelztemperatur auf einem Thermometer bestimmt wird, beispielsweise bei einer Heizrate von 2°C/min, oder mittels eines automatischen Schmelzpunktgerätes. Vorzugsweise liegen die Schmelzpunkte bei 40 bis 80 °C, noch stärker bevorzugt bei 50 bis 75 °C, beispielsweise bei 60 bis 72 °C.

Der phlegmatisierte Radikalinitiator ist bei Raumtemperatur frei rieselnd (frei rieselfähig, nichtklumpend). So ist gewährleistet, dass er nicht staubig ist, da sonst die Gefahr bestünde, dass beim Zuschmelzen einer Patrone oder eines Beutels an den Wänden anhaftender Initiator (Peroxid) zersetzt wird und zu Problemen beim Zuschmelzen (Bildung von Blasen etc.) führen kann.

Die mittlere Korngröße $d_{50}$ des freifließfähigen Pulvers liegt im Bereich 180-300 $\mu$m was am vorteilhaftesten für die Prozessfähigkeit und Abfüllbarkeit bei dennoch guter Lösegeschwindigkeit im Kunstharz im Anwendungsfall ist. Der Anteil an Feinkorn mit einem Teilchendurchmesser < 100 $\mu$m liegt bei max. 5 Gew.-%, insbesondere bei max. Gew.-1 % liegt und der Anteil an Grobkorn mit einem Teilchendurchmesser > 500 $\mu$m bei max. 5 Gew-%, insbesondere bei max. 2 Gew.-% oder max. 1 Gew-% liegt. Ein Pulver mit diesen Korngrößenparametern erlaubt eine Füllung der Innenampullen (Härterröhrchen) in der Art, dass eine gleichmäßige Verteilung entlang der Patronenachse erreicht wird. Teilchengrößen und Teilchengrößenverteilungen werden mittels Siebanalyse ermittelt. Die Angaben in Gew-% sind hier bezogen auf das Härterpulver (= die Härterkomponente).

Als Radikalinitiator für die Härtung der erfindungsgemäßen Kits finden radikalbildende Peroxide, z.B. organische Peroxide, wie Diacylperoxide, z.B. Dibenzoylperoxid (besonders bevorzugt), Di-(p-chlorbenzoyl)peroxid, Di-(2,4-dichlorobenzoyl)peroxid, Acetylbenzoylperoxid; Ketonperoxide, wie Bis(1-hydroxyalkyl)peroxide, z.B. 1,1'-Dihydroxydicyyclohexalperoxid, oder Diketonperoxide, wie 3,5-Dimethyl-3,5-dihydroxydioxolan-1,2), Methylethylketon-peroxid oder Cyclohexanonperoxid, Peroxyester von Mono- oder Dicarbonsäuren, wie Mono-tert-butylpermaeleat und Di-tert-butyldiperphthalat, oder Alkylperester, wie tert-Butylperbenzoat, anorganische Peroxide, wie Persulfate oder Perborate, sowie Mischungen davon Verwendung. Diese sind bei Raumtemperatur feste Stoffe.

Bezogen auf die Härterkomponente liegt der Anteil des Radikalinitiators (Härter im engeren Sinne) in einer möglichen bevorzugten Ausführungsform der Erfindung bei 0,5 bis 90 Gew.-%, z.B. 10 bis 70 Gew-%, insbesondere bei 45 bis 55 Gew.-%.

Der Anteil der Härterkomponente an einem erfindungsgemäß zu verwendenden Kit liegt dabei vorzugsweise in einem Bereich von 0,1 bis 60 Gew.-%, z.B. 0,5 bis 30 Gew.-%, insbesondere bei 1 bis 15 Gew.-%, wobei der Anteil an Per¬oxid, ebenfalls bezogen auf die Masse der gesamten zugehörigen Reaktionsharzformulierung (100 %), bei 0,1 oder mehr Gew.-%, z.B. bei 0,5 bis 15 Gew.-%, insbesondere bei 1 bis 10 Gew.-%, in einer besonders bevorzugten Ausführungsform bei 0,1 bis < 1 Gew.-%liegen kann.

Weitere Bestandteile der Härterkomponente sind möglich, wie Füllstoffe und/oder wei¬tere Zusätze, wie Verdickungs-mittel und/oder weitere Zusatzstoffe, wie Farbstoffe, Pigmente, Additive und dergleichen. Der Anteil aller Zusätze kann beispielsweise bei einem Gewichtsanteil von insgesamt 0,1 (insbe¬son¬dere 10) bis 99,5 Gew.-%, z.B. von 1 (insbesondere 10) bis 70 Gew.-%, bezogen auf die Härterkomponente, liegen.

Die Herstellung der in den erfindungsgemäß zu verwendenden Kits beinhalteten phlegmatisierten Radikalinitiatoren, wobei der Weichmacher eine Schmelztemperatur im Bereich von 40 bis 90 °C oder insbesondere wie vorstehend angegeben hat, der Initiator bei Raumtemperatur in fester Form vorliegt und der phlegmatisierte Radikalinitiator bei Raumtemperatur in partikulärer Form vorliegt und frei rieselnd ausgeführt ist, kann beispielsweise durch Mischung eines ein organisches Peroxid (wie vor- und nachstehend beschrieben) ohne oder mit einem Wassergehalt (beispielsweise von 20 bis 30 Gew-% bezogen auf die Härterkomponente) mit dem vorzugsweise pulverförmigen, gewünschtenfalls gemahlenen festen Weichmacher (wie vor- und nachstehend beschrieben), oder vorzugsweise durch Beschichten des festen organischen Peroxids mit dem festen Weichmacher durch Einführung des letzteren als Schmelze oder gelöst in einem leicht (destillativ) entfernbaren Lösungsmittel in eine verdünnte Suspension des organischen Peroxids unter starkem Rühren und Erwärmen, insbesondere auf eine Temperatur oberhalb der Schmelztemperatur des Weichmachers, z.B. zwischen 40 bis 90 °C oder insbesondere wie vorstehend angegeben, und anschließende Abkühlung und Auskristallisierung der umschichteten Peroxidpartikel. Gewünschtenfalls kann durch Sieben die gewünschte Korngröße eingestellt werden, insbesondere falls diese nicht durch die Prozessführung eingestellt werden kann.

Das in der radikalisch polymerisierbares (= härtbares) Kunstharz (Reaktivharz) umfassenden Kunstharzkomponente beinhaltete Kunstharz ist vorzugsweise ausgewählt aus einem Vinylesterurethanharz, einem Vinylesterharz,

einem propoxylierten oder insbesondere ethoxyliertem aromatischen Diol- (insbesondere Bisphenol-A) oder Novolak-(insbesondere di-)(meth)acrylat oder ferner einem ungesättigten Polyester ausgewählt.

Als Vinylesterurethanharz kommt beispielsweise ein solches wie in EP 0 508 183 A1 offenbart, oder eines wie nachfolgend als bevorzugtes Urethan(meth)acrylat beschrieben.

EP 0 508 183 A1 beschreibt Vinylesterurethanharze, die folgende Gruppen aufweisen:

a)

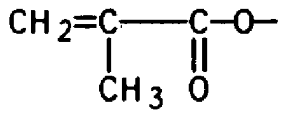

b)

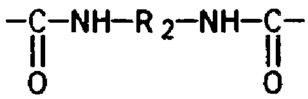

c)

$-O-R_3-O$

d)

$-NH-R_4-NH$

worin jeweils $R_2$ für einen aromatischen, aliphatischen oder cycloaliphatischen, gegebenenfalls Ethergruppen enthaltenden Rest mit 4 bis 300 Kohlenstoffatomen, vorzugsweise einen aromatischen Rest mit 6 bis 100 Kohlenstoffatomen, steht;
$R_3$ und $R_3$ jeweils unabhängig voneinander für einen aliphatischen, cycloaliphatischen oder aromatischen Rest mit 2 bis 500 Kohlenstoffatomen, vorzugsweise einen aliphatischen Rest mit 4 bis 100 Kohlenstoffatomen, stehen, wobei das Vinylesterurethanharz vorzugsweise ein Umsetzungsprodukt aus (A) einem polyfunktionellen Isocyanat (beispielsweise 4,4'-Diphenylmethandiisocyanat oder ein Isomerengemisch aus 2,2'- und 4,4'-Diphenylmethandiisocyanat), (B1) gegebenenfalls einem mehrwertigen Alkohol (beispielsweise Dipropylenglykol, Polypropylenglykol oder ein Gemisch der beiden), und/oder (B2) gegebenenfalls einem mehrwertigen Amin (beispielsweise einem Aminobenzoesäureester von Polymethylenetherglykol), und (C) einem Hydroxyalkyl(meth)acrylat (beispielsweise Hydroxypropyl(meth)acrylat) ist, und wobei bei der Umsetzung das Gewichtsverhältnis (A) : (B1 *B2) zwischen 100:0 und 100:300 beträgt und das Äquivalentverhältnis Hydroxyalkyl(meth)acrylat zu den freien Isocyanatgruppen des Reaktionsproduktes A * B1 * B2 zwischen 3 : 1 und 1 : 2 liegt.

Bevorzugt ist ein Urethan(meth)acrylat, das einerseits aus der Umsetzung eines vorverlängerten monomeren Di- oder Polyisocyanats und/oder andererseits aus der Umsetzung eines polymeren Di- oder Polyisocyanats (z.B.: PMDI, MDI) mit Hydroxyalkyl(meth)acrylat, wie Hydroxyethyl- oder Hydroxypropyl(meth)acrylat, resultiert. Die Art und Weise zur Durchführung von Vorverlängerungsreaktionen und die Vielzahl der Vorverlängerungsreaktionsmöglichkeiten sind dem Fachmann bekannt und werden hier nicht alle explizit beschrieben. Es sei hier beispielhaft auf die Anmeldungen EP 0508183 A1, EP 0432087 A1 und die noch nicht offengelegte Anmeldung vom 14.02.2014 mit der Anmeldungsnummer DE 10 2014 101 861.3 verwiesen.

Eine besondere Ausführungsform betrifft solche Urethan(meth)acrylatharze, die nach einem nachfolgend kurz skizzierten Verfahren hergestellt werden

Es handelt sich um Verfahren zur Herstellung von Vinylesterurethanharzen, insbesondere Urethan(meth)acrylat-Harzen (nachfolgend auch U(M)A-Harze), welches dadurch gekennzeichnet ist, dass als Edukt für die Herstellung des Vinylesterurethan-, insbesondere U(M)A-Harzes ein Isocyanat mit einer mittleren Funktionalität von 2 oder insbesondere mehr als 2 (die auch durch Mischung von Isocyanaten einer Funktionalität unter zwei mit Isocyanaten einer Funktionalität größer 2 erzielt werden kann), beispielsweise von 2,0 oder insbesondere 2,1 bis 5, zum Beispiel von 2,2 bis 4, vorteilhaft z.B. von 2,3 bis 3,5, mit einem mindestens eine C-C-Doppelbindung (nicht konjugierte - olefinische Bindung)

aufweisenden aliphatischen Alkohol, insbesondere einem Hydroxyalkyl(meth)acrylat, vorzugsweise Hydroxyniederalkyl(meth)acrylat, wie Hydroxyethyl(meth)acrylat oder insbesondere Hydroxypropyl(meth)acrylat, vorzugsweise 2-Hydroxypropylmethacrylat (HPMA), umgesetzt wird. Das technisch verfügbare HPMA ist dabei als eine Mischung aus 2-Hydroxypropylmethacrylat und Hydroxyisopropylmethacrylat zu sehen, - auch andere eine olefinische Bindung aufweisende aliphatische Alkohole können als technische Isomerengemische oder als reine Isomere vorliegen.

Unter einem Isocyanat mit einer mittleren Funktionalität von weniger als 2 oder 2 oder insbesondere mehr als 2, beispielsweise von 2,1 bis 5, zum Beispiel von 2,2 bis 4, vorteilhaft z.B. von 2,3 bis 3,5, ist beispielsweise ein Polyisocyanat mit Uretdion-, Isocyanurat-, Iminooxadiazinon-, Uretonimin-, Biuret-, Allophanat- und/oder Carbodiimid-Strukturen (vorteilhaft mit einer Molekulargewichtsverteilung derart, dass keine einzelne Molekülspezies zu mehr als 50 Gewichtsprozent vorliegt und gleichzeitig mehr als 50 Gewichtsprozent der Ketten aus mindestens 3 + 1 kovalent gebundenen Monomereinheiten/Reaktanten zusammengesetzt sind (siehe genauer Polymerdefinition nach REACH)) oder vorzugsweise eine (z.B. in technischen Herstellprozessen typischerweise anfallende oder nachfolgend gezielt (z.B. durch Zugabe und/oder Abdestillation von Monomeren oder Monomerenmischungen) eingestellte) Mischung von (i) ein oder mehreren monomeren Mono- oder insbesondere Diisocyanaten, wie Diphenylmethandiisocyanat (MDI), insbesondere 4,4'-Diphenylmethyldiisocyanat oder 2,2'-Diphenylmethandiisocyanat oder Mischungen von Diphenylmethandiisocyanat-Isomeren (mit unterschiedlichen Positionen der Isocyanatgruppen an den Phenylkernen) wie den gerade genannten, mit (ii) ein oder mehreren "polymeren" Diphenylmethandiisocyanaten (PMDI), das heißt vorzugsweise Roh-MDI (Rohprodukt der industriellen Herstellung von MDI ohne Trennung der einzelnen Isomeren z.B. durch Destillation) mit (d.h. beinhaltend) mehreren Isomeren und höherfunktionellen Homologen und z.B. einem mittleren Molekulargewicht in der Größenordnung von 200 bis 800 g/mol und einer Funktionalität wie oben angegeben, z.B. mit einem mittleren Molekulargewicht von 280 bis 500, z.B. 310 bis 480 und einer Funktionalität von 2,4 bis 3,4, z.B. von 3,2. Bevorzugt sind marktübliche PMDI, die aus dem Roh-MDI selbst oder auch aus dem Roh-MDI z.B. durch Abdestillation und/oder Zugabe von monomerem MDI erhalten werden und ein mittleres Molekulargewicht von 310-450 aufweisen und auch Uretdion-, Isocyanurat-, Iminooxadiazinon-, Uretonimin-, Biuret-, Allophanat- und/oder Carbodiimid-Strukturen beinhalten können. Besonders bevorzugt sind marktübliche PMDI mit einer Molekulargewichtsverteilung derart, dass keine einzelne Molekülspezies zu mehr als 50 Gew.-% vorliegt.

Unter "Funktionalität" ist die (durchschnittliche) Anzahl der Isocyanatgruppen pro Molekül zu verstehen, bei Diphenylmethandiisocyanat ist diese Funkionalität (im Wesentlichen, d.h. von verunreinigungsbedingten Abweichungen abgesehen) 2, bei den PMDI handelt es sich um eine (in der Regel vom Hersteller angegebene) mittlere Funktionalität, die gemäß der Formel

$$f = \frac{\sum n_i \cdot f_i}{\sum n_i}$$

($f$ = Funktionalität, $n_i$ = Zahl der Moleküle einer Funktionalität $f_i$,)

errechnet werden kann und vorzugsweise zwischen unter 2 oder 2 oder besonders bevorzugt über 2, beispielsweise 2,1 und 5,0 oder in den Bereichen wie oben angegeben liegt.

Das Verfahren zur Herstellung von Urethan(meth)acrylat-Harzen findet vorzugsweise in Gegenwart von einem Katalysator, wobei entsprechende Katalysatoren, die die Reaktion zwischen Hydroxylgruppen und Isocyanatgruppen katalysieren, dem Fachmann hinreichend bekannt sind, beispielsweise einem tertiären Amin, wie 1,2-Dimethylimidazol, Diazabicyclooctan, Diazabicyclononan, , oder einer Organometallverbindung (z.B. von K, Sn, Pb, Bi, Al und insbesondere auch von Übergangsmetallen wie Ti, Zr, Fe, Zn, Cu); sowie Mischungen von zwei oder mehr davon; beispielsweise (bezogen auf die Reaktionsmischung) in einem Anteil von 0,001 bis 2,5 Gew.-%; vorzugsweise in Gegenwart von *Stabilisatoren* (Inhibitoren), wie beispielsweise Phenothiazin, TEMPO, TEMPOL, Hydrochinon, Dimethylhydrochinon, Triphenylphosphit, tert.-Butylhydrochinon, Hydrochinonmonoethylether, tert.-Butyl-brenzkatechin und/oder p-Benzochinon, sowie Mischungen von zwei oder mehr davon; z.B. in einer Menge von 0,0001 bis 2,5 Gew.-%, bezogen auf die Reaktionsmischung, statt, bei bevorzugten Temperaturen z.B. im Bereich von 0 bis 120 °C, vorteilhaft von 50 bis 95 °C.

Beispiele für geeignete Katalysatoren und Stabilisatoren sind dem Fachmann bekannt, beispielsweise wie aus "Polyurethane Kunststoff-Handbuch 7" von Becker, G.W.; Braun, D.; Oertel, G., 3. Auflage, Carl Hanser Verlag, 1993, ersichtlich.

Die Reaktion kann ohne Lösungsmittel (der mindestens eine C-C-Doppelbindung aufwiesende aliphatische Alkohol, insbesondere das Hydroxy(nieder)alkyl(meth)acrylat selbst dient dann als Lösungsmittel) oder in Gegenwart eines geeigneten Lösungsmittels durchgeführt werden, beispielsweise eines weiteren Reaktivverdünners. "Reaktiv"

bezieht sich dabei hier auf die Formulierung des Klebemittels und dessen Aushärtung, nicht auf die Addition des Alkohols an das Isocyanat.

Die Reaktion kann auch derart geführt werden, dass über eine Vorverlängerung ein Präpolymer gebildet und erst danach die noch übrigen Isocyanatgruppen mit dem mindestens eine C-C-Doppelbindung aufweisenden aliphatischen Alkohol, insbesondere dem Hydroxy(nieder)alkyl(meth)acrylat, wie oben oder unten beschrieben, umgesetzt wird.

Für die Herstellung des Präpolymeren finden dabei zum Erzielen einer mittleren Isocyanat-Funktionalität von kleiner als zwei, zwei oder insbesondere größer als zwei die oben genannten Isocyanate und Polyole mit zwei oder mehr Hydroxygruppen pro Molekül und/oder Polyamine mit zwei oder mehr Aminogruppen pro Molekül oder Aminole mit zwei oder mehr Amino- und Hydroxygruppen pro Molekül Verwendung, oder es werden Isocyanate mit einer Funktionalität von 2 mit Polyolen, Polyaminen oder Aminolen mit einer mittleren OH- und/ oder Amino-Funktionalität von mehr als 2 eingesetzt.

Polyole (Di- oder höherfunktionale Alkohole) sind dabei insbesondere zwei- oder höherfunktionale Alkohole, z.B. Folgeprodukte des Ethylen- oder Propylenoxids, wie Ethandiol, Di- bzw. Triethylenglykol, Propan-1,2- oder -1-3-diol, Dipropylenglykol, andere Diole, wie 1,2-, 1,3- oder 1,4-Butandiol, 1,6-Hexandiol, Neopentylglykol, 2-Ethylpropan-1,3-diol oder 2,2-Bis(4-hydroxycyclohexyl)-propan, Triethanolamin, Bisphenol A oder Bisphenol F oder deren Oxyethylierungs-, Hydrierungs- und/oder Halogenierungsprodukte, höherwertige Alkohole, wie z.B. Glycerin, Trimethylolpropan, Hexantriol und Pentaerythrit, hydroxylgruppenhaltige Polyether, z.B. Oligomere aliphatischer oder aromatischer Oxirane und/ oder höherer cyclischer Ether, z.B. Ethylenoxid, Propylenoxid, Styroloxid und Furan, Polyether mit jeweils endständigem Hydroxy, die in der Hauptkette aromatische Struktureinheiten enthalten, z.B. die des Bisphenol A bzw. F, hydroxylgruppenhaltige Polyester auf der Basis der oben genannten Alkohole bzw. Polyether und Dicarbonsäuren bzw. ihrer Anhydride, z.B. Adipinsäure, Phthalsäure, Isophthalsäure, Terephthalsäure, Tetra- bzw. Hexahydrophthalsäure, Endomethylentetrahydrophthalsäure, Maleinsäure, Fumarsäure, Itaconsäure, Sebacinsäure oder dergleichen. Besonders bevorzugt sind Hydroxylverbindungen mit Kettenversteifung bewirkenden aromatischen Struktureinheiten, Hydroxyverbindungen mit ungesättigten Komponenten zur Erhöhung der Vernetzungsdichte, wie Fumarsäure, oder verzweigte oder sternförmige Hydroxyverbindungen, insbesondere drei-bzw. höherfunktionale Alkohole und/ oder Polyether bzw. Polyester, die deren Struktureinheiten enthalten. Besonders bevorzugt sind Niederalkandiole (ergeben divalente Reste -O-Niederalkylen-O-).

Aminole (Aminoalkohole) sind Verbindungen, die insbesondere eine oder mehrere Hydroxy- und eine oder mehrere Aminogruppen in ein und demselben Molekül enthalten. Bevorzugte Beispiele sind aliphatische Aminole, insbesondere Hydroxyniederalkylamine (ergeben Reste -NH-Niederalkylen-O- oder -O-Niederalkylen-NH-), wie Ethanolamin, Diethanolamin oder 3-Aminopropanol, oder aromatische Aminole, wie 2-, 3- oder 4-Aminophenol.

Polyamine (Di- oder höherfunktionale Amine) sind organische Aminoverbindungen mit 2 oder mehr Aminogruppen, insbesondere Hydrazin, N,N'-Dimethylhydrazin, aliphatische Di- oder Polyamine, insbesondere Niederalkandiamine (ergeben Reste -NH-Niederalkyl-NH-), wie Ethylendiamin, 1,3-Diaminopropan, Tetra- oder Hexamethylendiamin oder Diethylentriamin, oder aromatische Di- oder Polyamine, wie Phenylendiamin, 2,4- und 2,6-Toluoldiamin, oder 4,4'-Diaminodiphenylmethan, Polyetherdiamine (Polyethylenoxide mit endständigen Aminogruppen) oder Polyphenyl/Polymethylen-polyamine, die durch Kondensation von Anilinen mit Formaldehyd erhältlich sind.

Das Verhältnis von freien Isocyanatgruppen des oder der Isocyanate zu Hydroxygruppen des oder der Hydroxyniederalkyl(meth)acrylate wird vorteilhaft derart gewählt, dass eine schnelle und vollständige Umsetzung der Isocyanatgruppen resultiert, das heißt, die Mol-menge der Hydroxygruppen (und damit die korrelierende Mol-Menge an Hydroxyniedera-Ikyl(meth)acrylat) ist größer als die Mol-Menge der Isocyanatgruppen, z.B. 1,03 bis 5-mal so groß, wie z.B. 1,05 bis 4 mal so groß oder 1,1 bis 3 mal so groß . Überschüssiges Hydroxyniederalkyl(meth)acrylat dient als Reaktivverdünner.

Vinylesterharze sind insbesondere Ester von ungesättigten Carbonsäuren mit aromatischen Di- oder Polyepoxiden, insbesondere Umsetzungsprodukte von Bisphenol-A-, Bisphenol-F- und/oder Novolak-di- und/ oder -polyglycidylethern, mit ungesättigten Carbonsäuren, z.B. $C_2$-$C_7$-Alkencarbonsäuren, wie insbesondere (Meth)acrylsäure.

Beispiele für in besonderen Ausführungsformen der Erfindung vorhandene bzw. verwendete Epoxy(meth) acrylate sind solche der idealisierten Formel

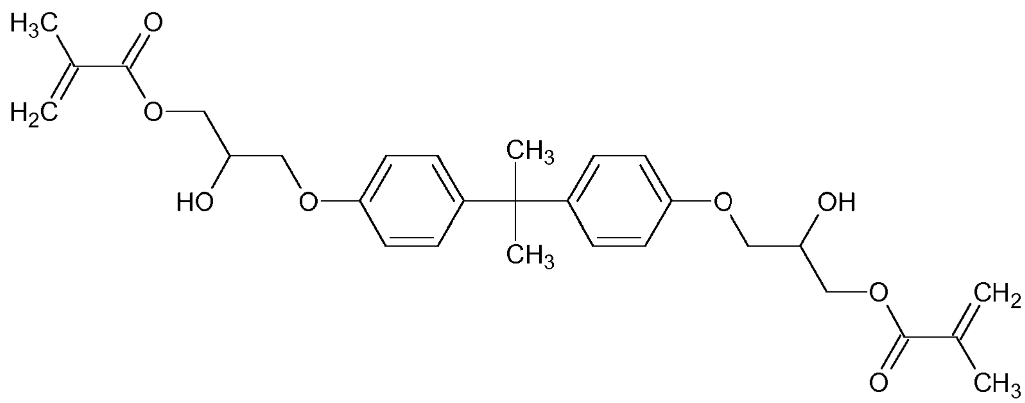

oder allgemeiner unter Berücksichtigung der Vorverlängeungsreaktion bei der Herstellung des Bisphenol-A-diglycidylethers der idealisierten Formel

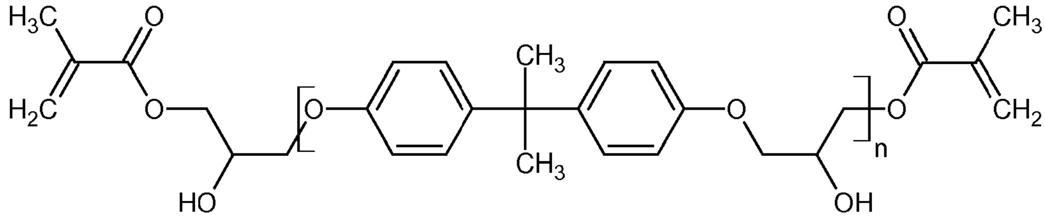

worin n für eine Zahl größer oder gleich 1 steht (wenn Gemische verschiedener Moleküle mit unterschiedlichen n-Werten vorliegen und durch die Formel repräsentiert werden, sind auch nicht-ganzzahlige Zahlen als Mittelwert möglich).

Propoxylierte oder insbesondere ethoxylierte aromatische Diol- oder Novolak-(insbesondere di-)(meth)acrylate sind vorzugsweise propoxylierte oder insbesondere ethoxylierte Bisphenol-A-, Bisphenol-F- oder Novolak-(insbesondere di-)(meth)acrylate.

Beispiele für in besonderen Ausführungsformen der Erfindung vorhandene bzw. verwendete propoxylierte oder insbesondere ethoxylierte aromatische Diol-, wie Bisphenol-A-, Bisphenol-F- oder Novolak-(insbesondere di-)(meth)acrylate sind solche der idealisierten Formel

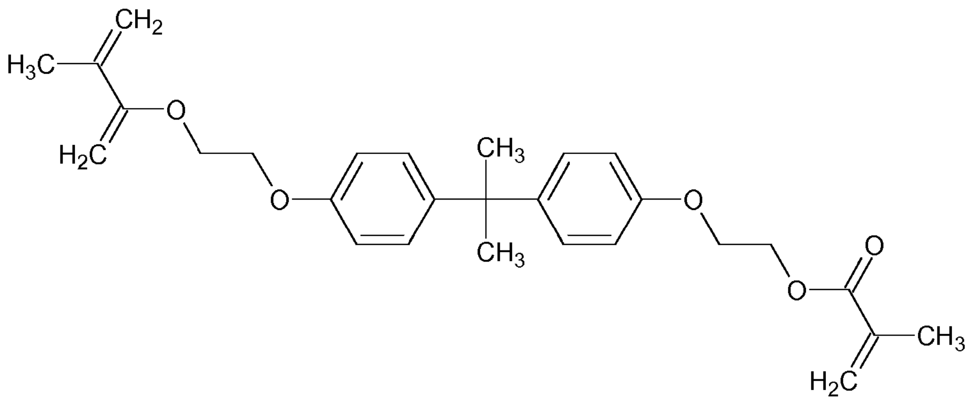

oder allgemein noch unter Berücksichtigung höherer Ethoxylierungsgrade der idealisierten Formel:

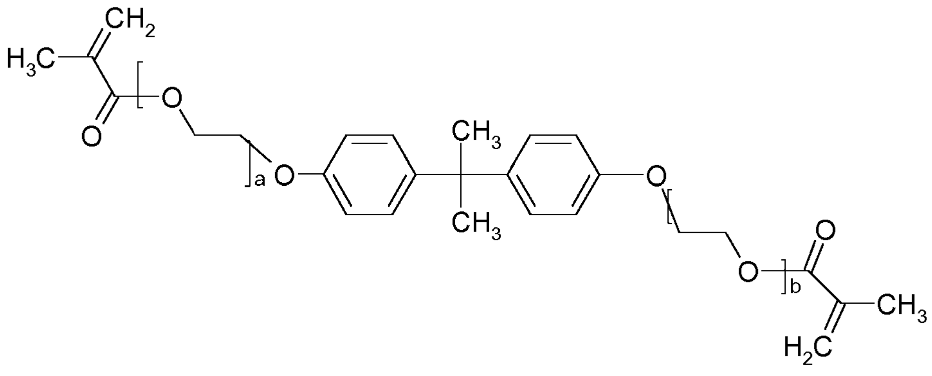

worin a und b jeweils unabhängig voneinander für eine Zahl größer oder gleich 0 stehen mit der Maßgabe, dass vorzugsweise mindestens einer der Werte größer als 0 ist, vorzugsweise beide 1 oder größer sind (wenn Gemische verschiedener Moleküle mit unterschiedlichen (a und b)-Werten vorliegen und durch die Formel repräsentiert werden, sind auch nicht-ganz-zahlige Zahlen als Mittelwert möglich, für isoliert betrachtete Einzelmoleküle jeweils nur ganze Zahlen).

Neben den vorstehend genannten polymerisierbaren Bestandteilen (welche die polymerisierbaren Bestandteile der Kunstharze sind) können in der Kunstharzkomponente weitere (insbesondere übliche) Inhaltsstoffe beinhaltet sein.

Wichtige Beispiele für weitere Inhaltsstoffe sind hier aminische Beschleuniger, Inhibitoren, nicht reaktive Verdünner, reaktive Verdünner, Thixotropiermittel, Füllstoffe und/oder weitere Additive.

Als aminische Beschleuniger kommen solche mit hinreichend hoher Aktivität in Frage, wie insbesondere (vorzugsweise tertiäre, insbesondere hydroxyalkylaminogruppensubstituierte) aromatische Amine ausgewählt aus der Gruppe, die aus epoxyalkylierten Anilinen, Toluidinen oder Xylidinen, wie z.B. ethoxyliertem Toluidin, Anilin oder Xylidin, beispielsweise N,N-bis(hydroxypropyl- oder hydroxyethyl)-toluidinen oder -xylidinen, wie N,N-bis(hydroxypropyl- oder hydroxyethyl)-p-toluidin, N,N-Bis(hydroxyethyl)-xylidin und ganz besonders entsprechenden höher alkoxylierten technischen Produkten, ausgewählt sind. Ein oder mehrere derartige Beschleuniger sind möglich. Die Beschleuniger haben, vorzugsweise einen Anteil (Konzentration) von 0,005 bis 10, insbesondere von 0,1 bis 5 Gew.-%, hier bezogen auf die Kunstharzkomponente.

Als Inhibitoren können beispielsweise nichtphenolische (anaerobe) und/oder phenolische Inhibitoren zugesetzt werden.

Als phenolische Inhibitoren (die oft als bereits zugemischter Bestandteil von käuflichen radikalisch härtenden Reaktionsharzen vorgesehen sind, aber ferner auch fehlen können) kommen (nicht-alkylierte oder alkylierte) Hydrochinone, wie Hydrochinon, ferner Mono-, Di- oder Trimethylhydrochinon, (nichtalkylierte oder alkylierte) Phenole, wie 4,4'-Methylen-bis(2,6-di-tert-butylphenol), 1,3,5-Trimethyl-2,4,6-tris(3,5-di-tert-butyl-4-hydroxy-benzyl)-benzol, (nicht-alkylierte oder alkylierte) Brenzcatechine wie tert.-Butylbrenzcatechin, 3,5-Di-tert-butyl-1,2-benzoldiol oder, oder insbesondere 4-Methoxyphenol, oder Gemische von zwei oder mehr davon, in Frage. Diese haben vorzugsweise einen Anteil von bis zu 1 Gew.-%, insbesondere zwischen 0,0001 und 0,5 Gew.-%, z.B. zwischen 0,01 und 0,1 Gew.-%, hier bezogen auf die Kunstharzkomponente.

Als nicht-phenolische oder anaerobe (d.h. im Gegensatz zu den phenolischen Inhibitoren auch ohne Sauerstoff wirksame) Inhibitoren (welche insbesondere die Aushärtezeiten kaum beein-flussen) kommen vorzugsweise Phenothiazin oder organische Nitroxylradikale in Betracht. Als organische Nitroxylradikale können beispielsweise solche zugesetzt sein, wie sie in der DE 199 56 509, die hier insbesondere bezüglich der darin genannten Verbindungen durch Bezugnahme inkorporiert wird, beschrieben sind, insbesondere 1-Oxyl-2,2,6,6-tetrame¬thyl-piperi¬din-4-ol ("4-OH-TEMPO" oder "TEMPOL"). Der Gewichtsanteil der nicht-phenolischen Inhibitoren liegt vorzugsweise, bezogen auf die Reaktionsharzformulierung, im Bereich von 1 ppm (Gew.) bis 2 Gew.-%, insbesondere z.B. im Bereich von 10 ppm bis 1 Gew.-%, hier bezogen auf die Kunstharzkomponente.

Als nicht reaktive Verdünner können beispielsweise Pflanzenöle, wie Rizinusöl, oder ferner Bioalkohole und Fettsäuren und deren Ester zugesetzt werden, oder Gemische von zwei oder mehr davon, beispielsweise in einem Anteil von 3 bis 60 Gew.-%, z.B. von 4 bis 55 Gew.-% .-%, hier bezogen auf die Kunstharzkomponente.

Als Thixotropiermittel können übliche thixotropieverursachende Rheologiehilfsmittel verwendet werden, wie pyrogene Kieselsäure. Sie können z.B. in einem Gewichtsanteil von 0,01 bis 50 Gew.-%, beispielsweise von 0,5 bis 20 Gew.-%, zugesetzt werden, hier bezogen auf die Kunstharzkomponente.

Als Füllstoff finden übliche Füllstoffe, insbesondere Zemente (z.B. Portlandzemente oder Tonerdeschmelzzemente), Kreiden, Sand, Quarzsand, Quarzmehl, Korund oder dergleichen, die als Pulver, in körniger Form oder in Form von Formkörpern zugesetzt sein können, Verwendung, oder andere, oder Gemische davon, wobei die Füllstoffe ferner oder insbesondere auch silanisiert sein können. Die Füllstoffe können in einem Anteil von vorzugsweise 0 bis 90 Gew.-%,

beispielsweise von 5 bis 80 Gew.-% sein, bezogen auf das Gesamtprodukt einschließlich der Wandungen (Patronenhüllen, Folienhüllen) des Kits. Zusätzlich oder alternativ zu ein oder mehreren der genannten Füllstoffe können hydraulisch härtbare Füllstoffe, wie Gips, Branntkalk oder Zement (z.B. Tonerd- oder Portlandzement), Wassergläser oder aktive Aluminiumhydroxide, oder zwei oder mehr davon, zugesetzt werden.

Auch weitere Additive können zugesetzt sein, wie Weichmacher, nicht reaktive Verdünnungsmittel, Flexibilisatoren, Stabilisatoren, Rheologiehilfsmittel, Netz- und Dispergiermittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, Gemische von zwei oder mehr davon. Derartige weitere Zusätze können vorzugsweise insgesamt in Gewichtsanteilen von insgesamt 0 bis 90 %, beispielsweise von 0 bis 40 Gew.-%, zugesetzt sein, bezogen auf das Gesamtprodukt einschließlich Wandungen des Kits.

Als "reaktive Verdünner", z.B. zu bevorzugten Vinylestern, können zusätzlich auch ein oder mehrere (niedrigerviskose) radikalisch härtende ungesättigte Reaktivverdünner zugesetzt sein, worunter in erster Linie solche zu verstehen sind, die als radikalisch aushärtende (was "(z.B. vor Härterzugabe) aushärtbar" einschließt) Komponenten organische Verbindungen mit ungesättigten (z.B. olefinischen) Resten beinhalten oder insbesondere aus solchen Verbindungen bestehen, z.B. insbesondere (Meth)Acrylat-oder (Meth)-AcrylamidMonomere, wie Acrylsäure und/oder Methacrylsäure oder vorzugsweise deren Ester (als (Meth)acrylate bezeichnet) oder Amide, insbesondere (Meth) Acrylate wie Mono-, Di-, Tri- oder Poly (meth)-acrylate (einschließlich Hydroxyalkyl(meth)acrylaten, wie Hydroxypropyl(meth)acrylat oder Hydroxy-ethyl(meth)acrylat, Alkyl(meth)acrylate mit 1 bis 10 (Meth)acrylatgruppen, wie Mono-, Di-, Tri-, Tetra-, Penta-, Hexa- oder poly(meth)acrylate, z.B. Alkyldi- oder tri(meth)-acrylate, wie 1,2-Ethandioldi(meth)acrylat (Ethylenglykoldi(meth)acrylat), Butandioldi-(meth)acrylat, wie 1,3- oder insbesondere 1,4-Butandioldi(meth)acrylat, Hexandioldi(meth)-acrylat, 1,10-Decandioldi(meth)acrylat, Diethylglykol-di(meth)acrylat, Trimethylolpropan-tri(meth)acrylat, Glycerintri(meth)acrylat, Polyglycerinpoly(meth)acrylat, Polyethylenglykol-di(meth)acrylat, Cycloalkyl-, Bicycloalkyl- oder Heterocyclyl(meth)acrylate, worin Cycloalkyl oder Bicycloalkyl 5 bis 7 Ringkohlenstoffatome aufweist und Heterocyclyl 5 oder 6 Ringatome hat und 1 oder 2 Ringheteroatome ausgewählt aus N, O und S aufweist, wie Tetrahydrofurfuryl(meth)acrylat oder Isobornyl(meth)acrylat, oder Acetacetoxyalkyl-(meth)acrylat; oder ferner Styrole, wie Styrol, $\alpha$-Methylstyrol, Vinyltoluol, tert.-Butylstyrol und/oder Divinylbenzol; oder Gemische von zwei oder mehr davon, als mit dem radikalisch härtenden ungesättigten Reaktionsharz parallel aushärtende Bestandteile vorgesehen sein, beispielsweise in einem Gewichtsanteil von 0,1 bis 90 Gew.-%, z.B. zwischen 0,5 und 75 Gew.-% oder zwischen 1 und 40 Gew.-% bezogen auf die Kunstharzkomponente.

Vorteilhaft weist ein erfindungsgemäß verwendetes Kit ferner einmindestens eine Sigebundene hydrolysierbare Gruppe beinhaltendes Silan als Zusatz auf, oder die Füllstoffe sind vor ihrer Zugabe mit einem derartigen Silan modifiziert, wobei das Silan insbesondere ein solches ist, das bei der Polymerisation der Verankerungsmassen reaktive Gruppen (olefinische Doppelbindungen, z.B. in (Meth)acrylatgruppen, für entsprechende radikalisch härtbare Verankerungmassen), andererseits hydrolysierbare, an Si gebundene Gruppen, wie Alkoxy (z.B. mit 1 bis 7 Kohlenstoffatomen) oder Halogeno, wie Chloro, aufweisen, beinhaltet. Die Oberflächenmodifikation kann beispielsweise mit Silanen, die ein oder mehrere hydrolysierbare Gruppen, wie Alkoxy-, z.B. Methoxy- oder Ethoxy, am Siliciumatom gebunden enthalten, z.B. ausgewählt aus der Gruppe, die aus 3-Aminopropyltrialkoxysilanen, wie 3-Aminopropyl-trimethoxysilan oder 3-Aminopropyl-triethoxysilan, 3-Glycidyloxypropyltrialkoxysilanen (besonders bevorzugt bei Epoxybasierten Systemen), wie 3-Glycidyloxypropyltrimethoxysilan oder -ethoxysilan, Glycidyloxymethyltrimethoxysilan, 3-Glycidyloxypropylmethyldimethoxysilan, Bis-(3-trialkoxysilylpropyl)amin, wie Bis-(3-trimeth-oxysilylpropyl)amin oder Bis-(3-triethoxysilylpropyl) amin, 3-Mercaptopropyltrialkoxysilan, wie 3-Mercaptopropyltrimethoxysilan, und (als besondere Variante, insbesondere bei auf Basis ungesättigter reaktiv-Kunstharze beruhenden Systemen)) 3-(Meth)acryloyl-oxypropyl-trialkoxysilanen, wie 3-(Meth)acryloyl-oxypropyltrimethoxysilan oder -triethoxysilan oder 3-(Meth)acryloyl-oxymethyltrimethoxysilan oder -triethoxysilan, 3-(Meth)acryloyl-oxypropyl-methyldimethoxysilan und Alkenylalkoxysilane, wie Vinylalkoxysilane, z.B. Vinyltrimethoxysilan oder Vinyltriethoxysilan, und/ oder ferner in allen Ausführungsformen Tetraalkoxysilan, wie Tetraethoxysilan, Tetramethoxysilan oder Tetrapropoxysilan oder Alkoxypolysilikat (Ester der (Poly)kieselsäure), wie Ethyl- oder Propylpolysilikat; oder Gemische von zwei oder mehr davon, durchgeführt sein oder bei der Verwendung (z.B. zur Befestigung von Verankerungselementen) durchgeführt werden. Es können auch oligomeren Silaneeingesetzt werden oder durch Umsetzung mit (in das System eindiffundierendem oder Rest-) Wasser entstehen.

Andererseits können in speziellen Ausführungsformen der Erfindungegegenstände 3-(Meth)acryloyl-oxypropyltrialkoxysilanen, wie 3-(Meth)acryloyl-oxypropyltrimethoxysilan oder -triethoxysilan oder 3-(Meth)acryloyl-oxymethyltrimethoxysilan oder -triethoxysilan, 3-(Meth)acryloyl-oxypropylmethyldimethoxysilan und Alkenylalkoxysilane, wie Vinylalkoxysilane, z.B. Vinyltrimethoxysilan oder Vinyltriethoxysilan als derartige Silane bevorzugt sein,

Die Silane mit hydrolysierbaren Gruppen können in einer erfindungsgemäß zu verwendenden Verankerungsmasse im Kunstharzanteil beispielsweise in einem Gewichtsanteil von 0,01 bis 50, insbesondere von 0,1 oder mehr Gew.-%, wie von 1 bis 30 Gew.-%, vorzugsweise von 2 oder mehr Gew.-%, wie von 2 bis 30 oder bis 15 Gew.-%, von 3 oder mehr Gew.-%, wie von 3 bis 20 oder bis 10 Gew.-%, noch stärker bevorzugt von 3,5 oder mehr Gew.-%, z.B. von 3,5 bis 20 oder bis 8 Gew.-%, vorgesehen

Der Anteil der Kunstharzkomponente am Gesamtprodukt (Kit) liegt vorzugsweise im Bereich von 5 bis 90 Gew.-%, beispielsweise im Bereich von 10 bis 50 Gew.-%.

Unter einem Loch oder Spalt ist ein solches Loch oder ein solcher Spalt zu verstehen, das oder der in einem festen (insbesondere bereits als solcher fertiggestellten) Bausubstrat, insbesondere Mauerwerk oder Beton, ggf. auch in einem rissigen Substrat, wie rissigem Beton, vorhanden und mindestens von einer Seite her zugänglich ist, beispielsweise ein Bohrloch, oder ferner ein beim Mörteln mit anorganischen Mörtel- oder Putzmassen (wie mit Zement oder Gips) oder beim Betongießen ausgesparter Bereich oder dergleichen.

Unter Verankerungselement ist insbesondere ein solches aus Metall, beispielsweise ein Hinterschneidanker, eine Gewindestange, eine Schraube, ein Bohranker oder ein Bolzen, zu verstehen.

Die Einbringung des Verankerungselements nach Einbringen eines erfindungsgemäße Kits (insbesondere Patrone oder Folienbeutel) bewirkt die Zerstörung von dessen Wandmaterialien und ermöglicht damit, dass die Kunstharzkomponente und die Härterkomponente miteinander in Berührung kommen und gemeinsam zum ausgehärteten Kunstharz reagieren, so dass das Verankerungselement im Loch befestigt wird und dauerhaft ist.

Die erfindungsgemäße Verwendung findet insbesondere im Baubereich statt. Unter "Baubereich" ist insbesondere das Bauwesen im engeren Sinne zu verstehen, beispielsweise die Verankerung von Bauelementen, wie Platten für Fassaden oder dergleichen, mit Hilfe von Verankerungselementen in Substraten (d.h. im Rahmen der vorliegenden Erfindung Aufnahmewerkstoffen, insbesondere, soweit sie Bestandteile von durch Menschenhand errichteten Bauwerken sind, vor allem Beton, Mauerwerk (z.B. aus Naturstein, Vollsteinen, ferner Lochsteinen, Ziegeln, Blähbetonsteinen oder dergleichen), ferner Kunststoff oder Holz).

Die Erfindung betrifft auch die in den Ansprüchen genannten Erfindungsgegenstände, die Ansprüche sind daher auch als Teil der vorliegenden Beschreibung zu verstehen.

Das nachfolgende Beispiel dient der Illustration der Erfindung, ohne ihre Bedeutung einzuschränken:

E2BADMA technisches Ethoxyliertes Bisphenol-A-dimethacrylat
VE ist ein Vinylesterharz basierend auf Bisphenol-A
UMA Urethanmethacrylat basierend auf MDI und HPMA
BDDMA Butandioldimethacrylat
HPMA 2-Hydroxypropylmethacrylat
Silan Methacryloxypropyltrimethoxysilan
Quarz Quarzsandfraktion 80-200 μm
Korund Normalkorund 1100-1700 μm

Es werden Patronen M12 aus bestehend aus einem Härterinnenrohr (Innenampulle) und einem Außenrohr (Außenampulle) hergestellt. Die Innenrohre enthalten 0,32 g eines mit Ethylenglykoldibenzoat (Schmelzpunkt 70 °C) phlegmatisierten 50 Gew-%igen Dibenzoylperoxids (bezogen auf das phlegmatisierte Härterpulver), bestehen aus 1,05 g Glas und sind thermisch verschlossen. In die Patronenaußenrohre mit einem Glasgewicht von 3,60 g werden die Härterinnenrohre, das Harz und der Festfüllstoff eingebracht und ebenfalls abgeschweißt.

Die Harze erhalten eine Basisstabilisierung mit 500-700 ppm eines phenolischen Inhibitors und werden durch Zugabe von 1,2 bis 3 Gew-% (bezogen auf das Kunstharz) eines Aminbeschleunigers (Toluidinderivat) auf eine Gelierzeit von 3-4 min bei 23 °C eingestellt.

| Ansat z | E2BADMA | VE | UMA | BDDMA | HPMA | Silan | Quar z | Korun d |
|---|---|---|---|---|---|---|---|---|
| A1 | 3,55 | | | 0,29 | 0,15 | | 8,6 | |
| A2 | 3,55 | | | 0,29 | 0,15 | | | 11,9 |
| A3 | 3,13 | | | | | 0,82 | | 11,9 |
| A4 | | 2,15 | | 1,01 | 0,82 | | 8,6 | |
| A5 | | 2,15 | | 1,01 | 0,82 | | | 11,9 |
| A6 | | 2,15 | | 1,01 | | 0,82 | | 11,9 |
| A7 | | | 3,44 | 0,30 | 0,30 | | 8,6 | |
| A8 | | | 3,44 | 0,30 | 0,30 | | | 11,9 |
| A9 | | | 3,23 | | | 0,82 | | 11,9 |

## Patentansprüche

1. Verwendung von einem Kit in Form von einer Patrone oder einem Folienbeutel, die oder der mehrere, insbesondere zwei, Kompartimente aufweist, von denen eines eine radikalisch polymerisierbares Kunstharz umfassende Kunstharzkomponente beinhaltet, das andere einen phlegmatisierten Radikalinitiator in einer Härterkomponente beinhaltet, wobei der Radikalinitiator durch einen dicyclohexylphthalatfreien Weichmacher unter mindestens teilweiser Beschichtung phlegmatisiert ist, und wobei der Weichmacher eine Schmelztemperatur im Bereich von 40 bis 90 °C hat, der Radikalinitiator bei Raumtemperatur in fester Form vorliegt und der phlegmatisierte Radikalinitiator bei Raumtemperatur in partikulärer Form vorliegt und als frei rieselndes Pulver ausgeführt ist, zur Befestigung eines Verankerungselementes in einem (insbesondere Bohr-)Loch in einem Bausubstrat; wobei der Weichmacher Ethylenglykoldibenzoat ist, und wobei der phlegmatisierte Radikalinitiator eine Korngrößenverteilung $d_{50}$ im Bereich 180-300 μm hat, die durch Siebanalyse ermittelt ist und
wobei beim phlegmatisierten Radikalinitiator jeweils der Anteil an Feinkorn mit einem Teilchendurchmesser < 100 μm bei max. 5 Gew.-%, insbesondere bei max. 1 Gew.- % liegt und der Anteil an Grobkorn mit einem Teilchendurchmesser > 500 μm bei max. 5 Gew.-%, insbesondere bei max. 2 Gew.-% oder max. 1 Gew.- % liegt, wobei die Angaben in Gew.-% sich auf die Härterkomponente beziehen.

2. Verwendung nach Anspruch 1, wobei das radikalisch polymerisierbare Kunstharz in der Kunstharzkomponente ein Vinylesterurethanharz, ein Vinylesterharz, ein propoxyliertes oder insbesondere ethoxyliertes aromatischen Diol- oder Novolak- (meth)acrylat oder ferner ein ungesättigter Polyester ist.

3. Verwendung nach einem der Ansprüche 1 oder 2, wobei das radikalisch polymerisierbare Kunstharz ein Vinylesterurethan beinhaltet, das hergestellt ist mittels eines Verfahrens, welches **dadurch gekennzeichnet ist, dass** als Edukt für die Herstellung des Vinylesterurethan-, insbesondere U(M)A-Harzes ein Isocyanat mit einer mittleren Funktionalität von 2 oder niedriger oder insbesondere mehr als 2 (die auch durch Mischung von Isocyanaten einer Funktionalität unter zwei mit Isocyanaten einer Funktionalität größer 2 erzielt werden kann) mit einem mindestens eine C-C-Doppelbindung aufweisenden aliphatischen Alkohol, insbesondere einem Hydroxyalkyl(meth)acrylat, vorzugsweise Hydroxyniederalkyl-(meth)acrylat, wie Hydroxyethyl(meth)acrylat oder insbesondere Hydroxypropyl(meth)acrylat, vorzugsweise 2-Hydroxypropylmethacrylat (HPMA), umgesetzt wird.

4. Verwendung nach einem der Ansprüche 1 bis oder 2, dadurch gekennzeichet, dass das radikalisch polymerisierbare Kunstharz ein solches der idealisierten Formel

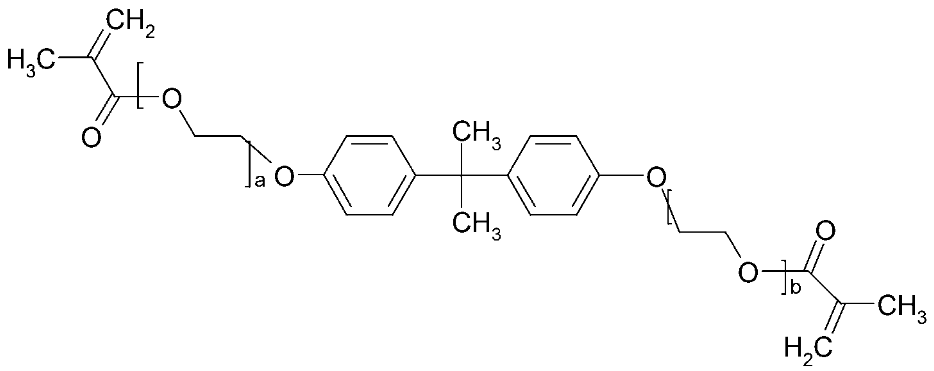

Ist, worin a und b jeweils unabhängig voneinander für eine Zahl größer oder gleich 0 stehen mit der Maßgabe, dass vorzugsweise mindestens einer der Werte größer als 0 ist,
vorzugsweise beide 1 oder größer sind, wobei, wenn Gemische verschiedener Moleküle mit unterschiedlichen (a und b)-Werten vorliegen und durch die Formel repräsentiert werden, auch nicht-ganz-zahlige Zahlen als Mittelwert möglich sind.

5. Verfahren zur Befestigung eines Verankerungselementes in einem Loch in einem Bausubstrat, bei dem eine Verwendung nach einem der Ansprüche 1 bis 4 stattfindet und durch Einbringen des Verankerungselementes die Patrone oder der Folienbeutel zerstört und die Komponenten des erfindungsgemäßen Kits miteinander und mit dem Verankerungselement und einer Lochwandung in Berührung kommen und das Verankerungselement unter Polymerisation im Bohrloch befestigt wird.

## Claims

1. Use of a kit in the form of a capsule or a foil pouch having a plurality of compartments, especially two compartments, of which one compartment includes a synthetic resin component comprising free-radical-polymerisable synthetic resin and the other compartment includes a stabilised free-radical initiator in a hardener component, wherein the free-radical initiator has been stabilised by a dicyclohexyl-phthalate-free plasticiser, being at least partly coated therewith, and wherein the plasticiser has a melting temperature in the range of from 40 to 90°C, the free-radical initiator is in solid form at room temperature and the stabilised free-radical initiator is in particulate form at room temperature and is implemented as a free-flowing powder, for fixing an anchoring element in a hole (especially a drilled hole) in a building substrate; wherein the plasticiser is ethylene glycol dibenzoate and wherein the stabilised free-radical initiator has a particle size distribution $d_{50}$ in the range 180-300 μm which has been determined by screen analysis, andwherein in the case of the stabilised free-radical initiator in each case the content of fine particles having a particle diameter < 100 μm is a maximum of 5 % by weight, especially a maximum of 1 % by weight, and the content of coarse particles having a particle diameter > 500 μm is a maximum of 5 % by weight, especially a maximum of 2 % by weight or a maximum of 1 % by weight, the amounts in % by weight relating to the hardener component.

2. Use according to claim 1, wherein the free-radical-polymerisable synthetic resin in the synthetic resin component is a vinyl ester urethane resin, a vinyl ester resin, a propoxylated or especially ethoxylated aromatic diol- or novolak-(meth) acrylate or, furthermore, an unsaturated polyester.

3. Use according to any one of claims 1 or 2, wherein the free-radical-polymerisable synthetic resin includes a vinyl ester urethane which has been produced by means of a method that is **characterised in that** as starting material for the production of the vinyl ester urethane resin, especially U(M)A resin, an isocyanate having an average functionality of 2 or less or especially more than 2 (which can also be achieved by mixing isocyanates of a functionality less than two with isocyanates of a functionality greater than 2) is reacted with an aliphatic alcohol having at least one C-C double bond, especially with a hydroxyalkyl (meth)acrylate, preferably hydroxy-lower alkyl (meth)acrylate, such as hydroxyethyl (meth)acrylate or especially hydroxypropyl (meth)acrylate, preferably 2-hydroxypropyl methacrylate (HPMA).

4. Use according to any one of claims 1 to/or 2, **characterised in that** the free-radical-polymerisable synthetic resin is one having the idealised formula

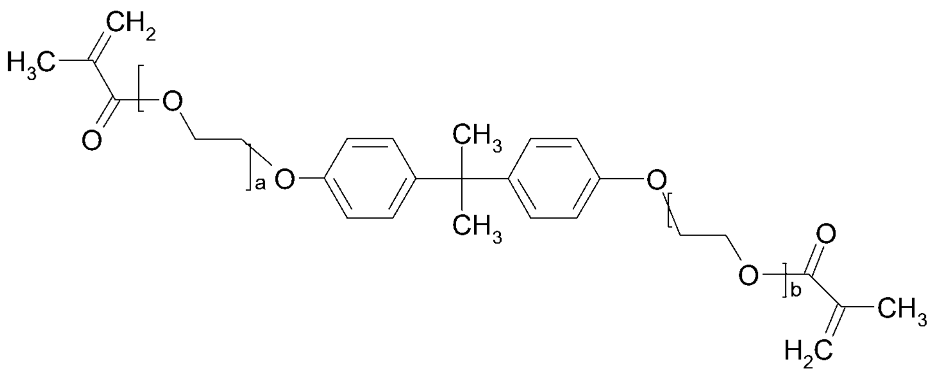

wherein a and b each independently of the other denotes a number greater than or equal to 0, with the proviso that preferably at least one of the values is greater than 0, preferably both values being 1 or more, wherein when mixtures of different molecules having different (a and b) values are present and are represented by the formula, non-integer numbers are also possible as a mean value.

5. Method for fixing an anchoring element in a hole in a building substrate, which comprises a use according to any one of claims 1 to 4 and in which the capsule or the foil pouch is ruptured by introduction of the anchoring element and the components of the kit according to the invention come into contact with one another and with the anchoring element and a hole wall, and the anchoring element is fixed, with polymerisation, in the drilled hole.

## Revendications

1. Utilisation d'un kit sous forme d'un cartouche ou d'un sachet en feuilles, qui comprend plusieurs compartiments, en

particulier deux, dont l'un contient un composant résine synthétique comprenant une résine synthétique polymérisable par voie radicalaire, l'autre contient dans un composant durcisseur un amorceur radicalaire phlegmatisé, l'amorceur radicalaire étant phlegmatisé par un plastifiant exempt de phtalate de dicyclohexyle par revêtement au moins partiel, et le plastifiant ayant une température de fusion dans la plage de 40 à 90 °C, l'amorceur radicalaire se présentant à la température ambiante sous forme solide et l'amorceur radicalaire phlegmatisé se présentant à la température ambiante sous une forme particulaire et étant réalisé sous forme d'une poudre à écoulement libre, pour la fixation d'un élément d'ancrage dans un trou (en particulier de mine) dans un substrat de construction, le plastifiant étant le dibenzoate d'éthylènegycol, et l'amorceur radicalaire phlegmatisé ayant une distribution granulométrique $d_{50}$ dans la plage de 180 à 300 µm, déterminée par analyse granulométrique, et
pour laquelle, dans l'amorceur radicalaire phlegmatisé, la proportion des fines ayant une granulométrie < 100 µm est au maximum de 5 % en poids, en particulier au maximum de 1 % en poids, et la proportion des particules grossières ayant une granulométrie > 500 µm étant au maximum de 5 % en poids, en particulier au maximum de 2 % en poids ou au maximum de 1 % en poids, les indications de % en poids étant rapportées au composant durcisseur.

**2.** Utilisation selon revendication 1, pour laquelle la résine synthétique polymérisable par voie radicalaire se trouvant dans le composant résine synthétique est une résine d'ester vinylique-uréthane, une résine d'ester vinylique, un (méth)acrylate de diol aromatique ou de novolaque propoxylé ou en particulier éthoxylé, ou de plus un polyester insaturé.

**3.** Utilisation selon l'une des revendications 1 ou 2, pour laquelle la résine synthétique polymérisable par voie radicalaire contient un ester vinylique-uréthane, qui est fabriqué par un procédé **caractérisé en ce qu'**on fait réagir en tant que réactif pour la fabrication de la résine d'ester vinylique-uréthane, en particulier d'U(M)A, un isocyanate ayant une fonctionnalité moyenne de 2 ou moins ou en particulier supérieure à 2 (qui peut aussi être obtenu par mélange d'isocyanates ayant une fonctionnalité inférieure à 2 avec des isocyanates ayant une fonctionnalité supérieure à 2), avec un alcool aliphatique ayant au moins une double liaison C-C, en particulier avec un (méth)acrylate d'hydroxyalkyle, de préférence un (méth)acrylate d'hydroxyalkyle inférieur, tel que le (méth)acrylate d'hydroxyéthyle, ou en particulier le (méth)acrylate d'hydroxypropyle, de préférence le méthacrylate de 2-hydroxypropyle (HPMA).

**4.** Utilisation selon l'une des revendications 1 à/ou 2, **caractérisée en ce que** la résine synthétique polymérisable par voie radicalaire est une telle résine ayant la forme idéalisée

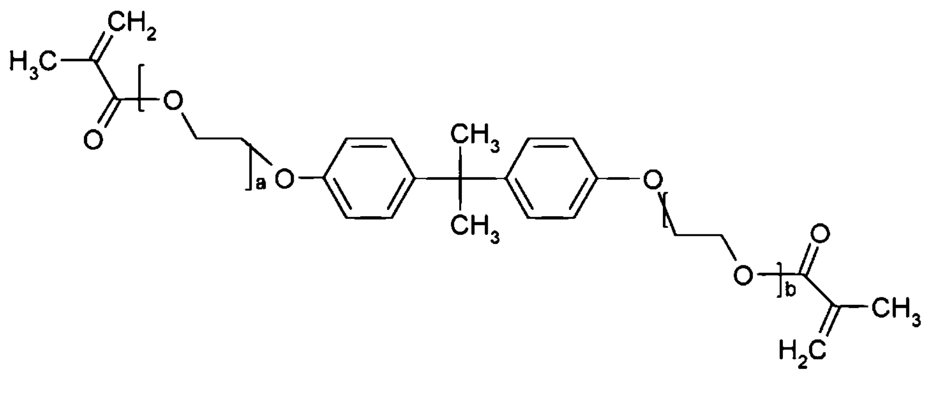

dans laquelle a et b représentent chacun indépendamment de l'autre un nombre supérieur ou égal à 0, à la condition que de préférence au moins l'une des valeurs soit supérieure à 0, de préférence que les deux vaillent 1 ou plus, auquel cas, en présence de mélanges de différentes molécules ayant des valeurs de a et de b différentes et sont représentés par la formule, des nombres non entiers sont possibles, en tant que valeur moyenne.

**5.** Procédé de fixation d'un élément d'ancrage dans un trou dans un substrat de construction, dans lequel on procède à une utilisation selon l'une des revendications 1 à 4 et, par introduction de l'élément d'ancrage, la cartouche ou le sachet en feuilles est détruit, et les composants du kit selon l'invention entrent en contact les uns avec les autres et avec un élément d'ancrage et une paroi du trou, l'élément d'ancrage étant fixé dans le trou de mine par polymérisation.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0508183 A
- US 3324040 A
- DE 10115587 A1
- US 6583259 B1
- EP 0508183 A1
- EP 0432087 A1
- DE 102014101861
- DE 19956509


### In der Beschreibung aufgeführte Nicht-Patentliteratur


- **BECKER, G.W.** ; **BRAUN, D.** ; **OERTEL, G.** Polyurethane Kunststoff-Handbuch 7. Carl Hanser Verlag, 1993